# EUROPEAN PATENT APPLICATION

(11) **EP 2 213 930 A1**
(43) Date of publication of application: **04.08.2010**
(21) Application number: 10250142.6
(22) Date of filing: 29.01.2010
(51) Int. Cl.: F16L 55/172

(54) **Improvements relating to hinged repair clamps**

(30) Priority: 30.01.2009 GB 0901579
(71) Applicant: Crane Ltd., Hitchin Hertfordshire SG4 0UD (GB)
(72) Inventor: Rex, Brian, Hitchin Hertforshire, SG5 2HH (GB); Harper, Brian, Hitchin Hertforshire, SG4 0RS (GB)
(74) Representative: Townsend, Victoria Jayne

(57) **Abstract**

A hinged clamp comprising two or more inter-engaging arcuate segments (41, 42) each provided with a bridging means presenting at least one integrated hinge edge, the hinge edge comprising both male (43) and female (44) hinge portions in a regularly repeating pattern such that any pair of segments (41, 42) can be inter-engaged together.

## Description

This invention relates to a novel hinge arrangement with particular application in a self locating repair clamp used in the temporary and permanent repair of leaking service mains (eg. water or gas supplies). Whilst designed with this application in mind it is to be understood the hinge design may have broader application in hinged clamps for use in a range of other purposes, for example but without limitation under pressure branch connections.

### Background

Hinged repair clamps are used widely in the repair of pipes in a wide range of sizes and materials carrying a wide variety of mediums. Some examples (without limitation) are gas, drainage and mains supply water. Such repair clamps typically comprise of two or more collar or clamp segments often but not always of metal construction which when in a closed configuration form a cylinder which, in use, embraces a pipe. Typically at least one segment of the clamp is provided with a gasket to seal the damaged pipe under repair. A variety of gasket designs may be used for this purpose, for example but without limitation, the gasket may have any one of a variety of cross sections and be located about just the perimeter of the segments or may be in the form of a mat type seal with any of a number of surface profiles which engages with the entire pipe surface beneath the clamp.

The clamp segments are connected to one another to form the cylinder using fasteners or other tightening means at lugs located at the circumferential ends of each segment which serve to energise and compress the gasket creating a seal around the damaged pipe portion.

In some products, the clamp segments have hinges between segments to facilitate assembly to the pipe requiring less fasteners to complete the gasket compression.

Typically these hinges comprise a rod or pin inserted through an inter - engaging arrangement of yolks provided on two adjacent segments, alternatively a C-shaped component might be secured around protruding, inter-engaging pins of adjacent segments. There are cost and design issues associated with the production of multiple component parts which, in use must operate effectively to provide a reliable hinge function.

In some arrangements adjacent segments might be integrally formed with one having a male connecting part and the other a female connecting part so the two can be assembled together without the need for an additional locating pin. Such arrangements involve tooling for two dissimilarly shaped castings (which must inter- engage at fairly close tolerances) which can be expensive to the production process, adding tooling and a greater complexity of parts to be made and stocked.

The present invention seeks to provide a segmented clamp which incorporates a novel hinge design which overcomes disadvantages associated with the prior art.

### Invention

In accordance with the present invention there is provided a hinged clamp comprising two or more inter-engaging arcuate segments each provided with a bridging means presenting at least one integrated hinge edge, the hinge edge comprising both male and female portions in a pattern such that any pair of segments can be inter-engaged together.

The integrated hinge edge and bridging means may be cast into the segment at the time of manufacture or may be fabricated separately and subsequently permanently fixed to the segment ready for clamp assembly.

Conveniently the hinge edges of all segments are made to an identical pattern. More conveniently at least two segments are identical in form and may be cast from a single mould. Segments produced to the same shape can be further machined to accommodate other components, for example fasteners, inlet or outlet holes.

An advantage of the proposed arrangement is that multiple segments can be provided using relatively few moulds. In the simplest case of a two part clamp, a single mould can be used to produce two identical inter-engaging portions. This saves considerably on cost particularly with regard to investment in making and maintaining fewer patterns. Also, stock logistics become less complex with less variety of parts to stock. A further advantage of an integrated hinge design is the reduction in total parts of the clamp and a consequent reduction in effort involved to assemble the clamp, reducing the assembly cost and the probability of errors in the assembly.

Where two or more segments of identical size and shape are produced, further machining may be employed to accommodate other needs of the clamp, for example; to accommodate a specific form of fastener, outlet or other requirements. In each case the integral hinge portion of each segment remains identical.

Conveniently, the hinge edge may comprise two distinctly shaped hinge portions, the female hinge yolk and the male hinge pin, which are formed on the clamp segment using a bridging means. One specific example of a bridging means is hinge lugs. The lugs may take any convenient shape or form.

In order for the hinge to allow inter-engaged segments to function correctly and allow the clamp segments to rotate to a closed position, the hinge axis desirably has its centre no higher than the plane defined by the clamp segment resting on its end on a flat surface. The flat surface might be defined as a plane which extends perpendicular to a tangent of the external arcuate surface of the clamp segment at the centre axis of the hinge when the clamp is In a fully closed position. If this centre of the hinge axis is positioned below this plane then a corresponding sized gap is introduced between the inter-engaged segments when the clamp is in the closed position. If the centre of the hinge axis is positioned too high with respect to the defined plane, the clamp segments are prevented from closing adequately at the fastener lug position.

The male and female hinge portions may consist of multiple or singular portions aligned along a common axis. They may be arranged axially in close or distant proximity to each other. They may be regularly or irregularly spaced to each other but desirably the hinge edge has rotational symmetry about a centre point so that two identical hinge edges on adjacent segments can be inter-engaged.

The hinge arrangement described can be applied to a wide range of clamp designs.

The hinged clamp of the invention may optionally further comprise one or more retaining means for holding the assembled hinge portions in axial alignment. Such retaining means may take any of a number of forms and may be positioned at one or more of any number of positions along the length of the hinge. Desirably, the retaining means secures the hinge at its two axially extreme ends. In one embodiment, the retaining means comprises a clip or pair of clips which locate at the axially extreme ends of the hinge.

The clamp may further comprise a securement means for maintaining the clamp in a closed position when installed around a damaged pipe portion. The securement means may conveniently comprise one or more nuts, bolts and/or washers. In one particular embodiment, the securement means may, optionally, comprise a pair of bolt lugs located on opposing edges of the two ends of the assembled clamp, a bolt configured to sit in the bolt lugs when the two ends are drawn sufficiently close together around a damaged pipe circumference and a fastening nut associated with one end of the bolt for applying load to the bolt when it is engaged with the bolt lugs. A retainer may be associated with a second end of the bolt resisting the bolt from rotating radially outwardly of the clamp so that it is urged radially towards the clamp to ensure its correct location within the bolt lugs during the closure of the clamp. In addition or as an alternative, there may be provided an outwardly inclined surface of the opposing bolt lug which tends to push the fastening nut of the bolt away from the clamp and pipe until the lugs are separated by a distance which is shorter than the bolt. As the distance between the lugs reduces, the bolt can be located in the opposing bolt lug and the nut tightened. The bolt lugs may have associated with them, tangentially extending fingers which, when the clamp is drawn around the pipe, engage against a surface of the opposing bolt lug thereby stopping excessive rotation of the bolt lugs which improves the seating of the nut and bolt head and reduces the stress in the bolt lugs.

The two ends of the clamp may additionally be provided with castellations or similar, interengageable projections extending circumferentially.

Desirably the clamp comprises just two similarly proportioned clamp portions connected via a hinge. The clamp portions may be cast or fabricated. Optionally, an external surface of at least two of the clamp portions is provided with a connector configured for connecting to a tool which can be used to control the fitting of the clamp assembly about a below ground pipe from an above ground location.

Each cast half clamp may be provided with a boss which can be drilled and tapped to provide outlets for the connection of pressure gauges, stopping equipment, service connections, bleeding valves, under-pressure drilling and tapping and the like.

### Description

An embodiment of the invention will now be further described with reference to the accompanying Figures in which:
Figure 1 shows a typical hinge arrangement in a hinged clamp known from the prior art.
Figure 2 shows an embodiment of a segment from a two part hinged clamp made in accordance with the present invention. Two opposing surfaces of the segment are shown.
Figure 3 shows an end view of the embodiment of Figure 2.
Figure 4 shows an identical pair of complementing hinged clamp half segments in accordance with the invention being prepared for interengagement to form a hinged clamp.
Figure 5 shows a clamp formed from a pair of clamp half segments as illustrated in Figure 4 with additional components illustrated.

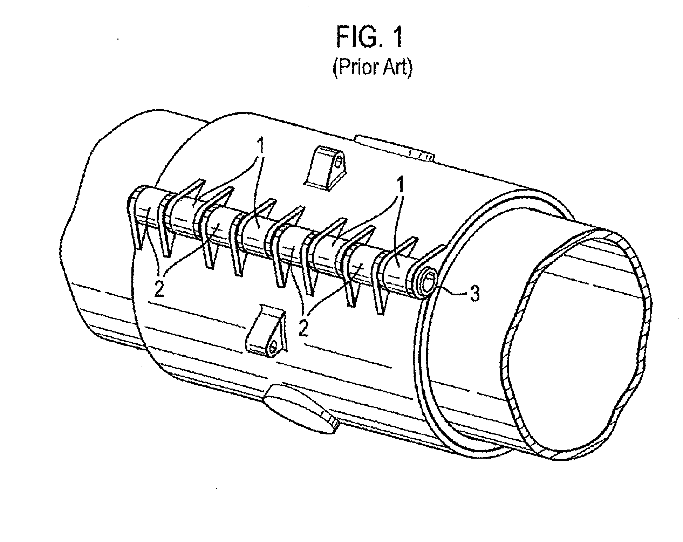

As can be seen from Figure 1 two clamp halves are each provided with a hinging edge in the form of a series of yolks (or female hinge parts). The apertures, of a consistent internal diameter, are aligned and receive a hinge pin (or male hinge part) to complete the hinge.

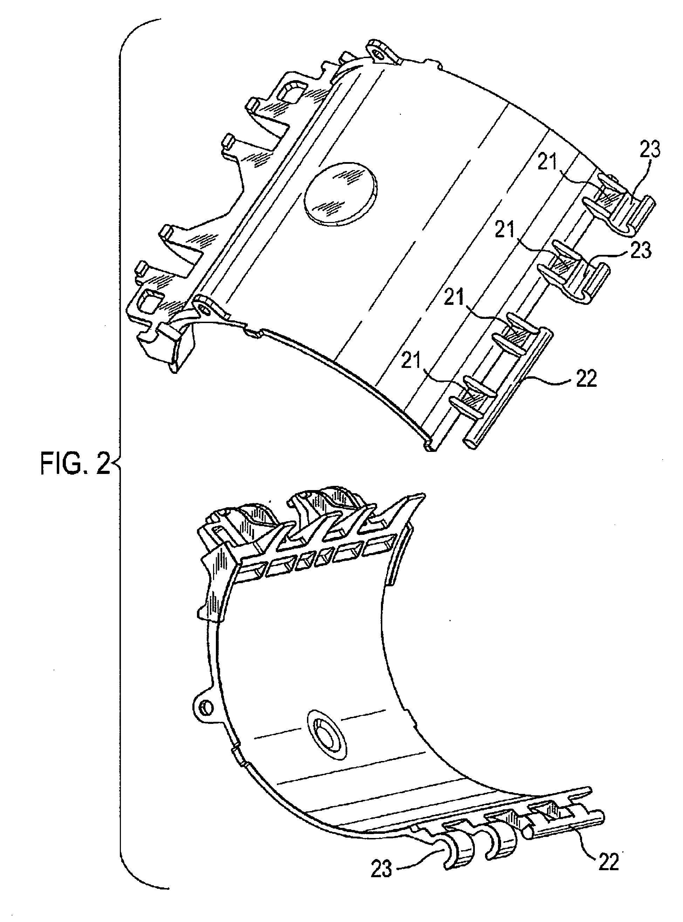

As can be seen from Figure 2, the segment has an arcuate profile and includes one hinge edge which is integrally cast onto the segment. The hinge edge comprises four hinge lugs 21, a first two of which carry an integral male hinge pin 22 and a second two of which carry an integral female hinge yolk 23.

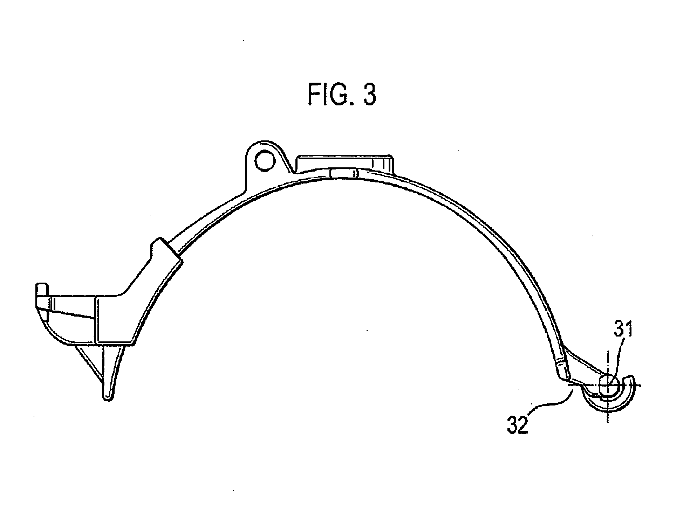

Figure 3 shows an end view of the segment of Figure 2. As can be seen the centre axis 31 of both the female yolk and male pin portions is common, is spaced apart from a tangent to the main segment body and sits slightly below a plane which is perpendicular to the tangent as represented by the gap referenced 32.

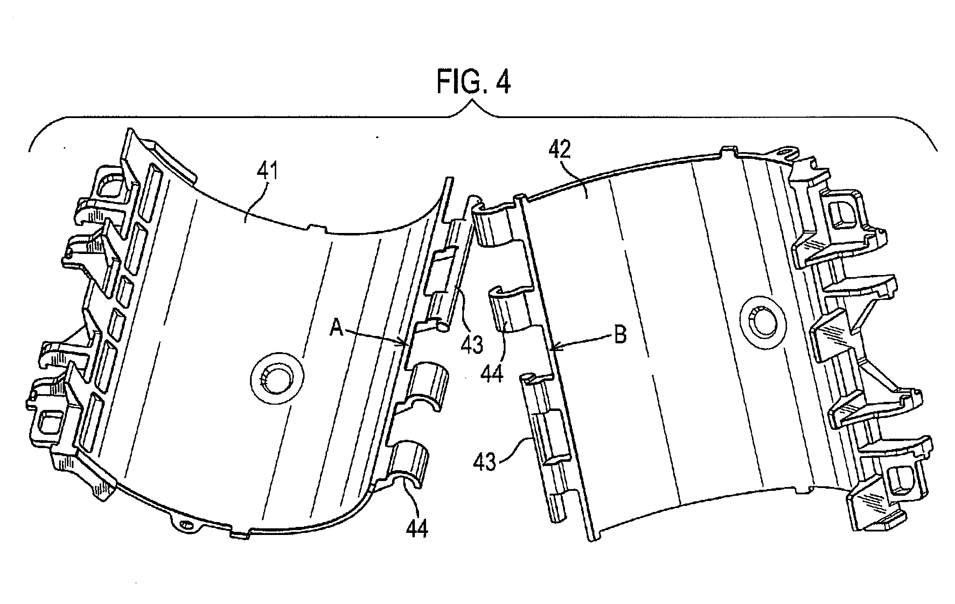

In Figure 4, identical castings or fabrications of clamp half segment 41, 42 are constructed so that the clamp half segments can be inter - engaged at the hinge when the clamp is fully or near fully open. Each clamp half 41, 42 has an identical integrated hinge edge comprising a male pin portion 43 and a female yolk portion 44. As the clamp half segments are closed to form a cylinder around a damaged pipe portion (not shown) disengagement of the inter-engaged hinge portions 43, 44 is not possible without the intervention of considerable force.

To assemble the hinge, the clamp halves 41, 42 are presented with their hinge edges 43, 44 towards each other with the clamps halves in the fully open position with the halves slightly tilted as shown in the Figure.

Locating points A and B which represent in axis of rotational symmetry of the hinge edges are drawn together. Once the centre axes of each hinge edge cross, the clamp halves are rotated to bring the axes into alignment until the hinge components are completely engaged. Once this is complete the clamp segments can be rotated about the hinge towards a closed position from where the hinge edges can not be disengaged.

In this example a mat gasket (not shown) may be attached to the clamp, this can act as a stop assisting in preventing the accidental disengagement of the hinge during its handling and when in the open position.

In use, the assembled hinged clamp is placed in position over a pipe. Additional circumferential tension can be imposed on the clamp by tightening means, for example nut and bolts 52. The tightening means 52 will further ensure the hinge 43, 44 remains in tight contact to complete the clamp cylinder.

Optionally, one or more clips or retainers 51 may be used to assist in maintaining the correct intimate engagement of the hinge 43, 44 during its handling and opening.

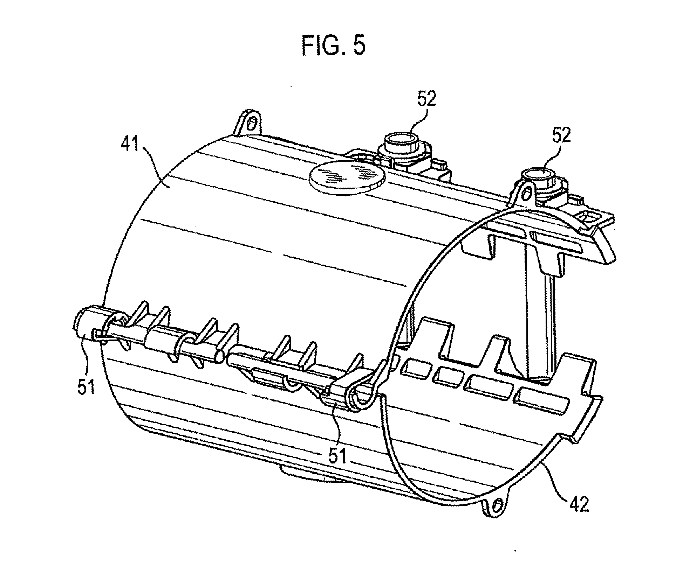

The clips 51 shown in Figure 5 can be of simple construction and of non structural material or proportions. Various suitable shapes and positioning arrangements will no doubt occur to the skilled addressee; it is however preferred to locate at least at the axially extreme ends of the hinges as illustrated.

## Claims

1. A hinged clamp comprising two or more inter-engaging arcuate segments (41, 42) each provided with a bridging means presenting at least one integrated hinge edge, the hinge edge comprising both mate (43) and female (44) hinge portions in a pattern such that any pair of segments (41, 42) can be inter-engaged together.

2. A hinged clamp as claimed in claim 1 comprising at least two identical segments (41, 42) made to the same pattern.

3. A hinged clamp as claimed in claim 2 wherein the identical segments (41, 42) are cast from a single mould.

4. A hinged clamp as claimed in any preceding claim wherein the hinge edge comprises two distinctly shaped hinge portions, a female hinge yolk (44) and a male hinge pin (43).

5. A hinged clamp as claimed in any preceding claim wherein the male (43) and female (44) hinge portions consist of multiple portions aligned along a common axis (31).

6. A hinged clamp as claimed in claim 5 wherein the hinge portions (43, 44) are irregularly spaced to each other but the hinge edge has rotational symmetry (A, B) about a centre point so that two identical hinge edges on adjacent segments (41, 42) can be inter-engaged.

7. A hinged clamp as claimed in any preceding claim wherein the hinge axis has its centre (31) no higher than a plane (32) which extends perpendicular to a tangent of the external arcuate surface of the clamp segment at the centre axis of the hinge when the clamp is in a fully closed position.

8. A hinged clamp as claimed in any preceding claim further comprising one or more retaining means (51) for holding the assembled hinge portions (43, 44) in axial alignment.

9. A hinged clamp as claimed in claim 8 wherein the retaining means (51) is configured to secure the hinge at its two axially extreme ends.

10. A hinged clamp as claimed in claim 9 wherein the retaining means (51) is a clip or pair of clips.

11. A hinged clamp as claimed in any preceding claim further comprising a securement means (52) for maintaining the clamp in a closed position when installed around a damaged pipe portion.

12. A hinged clamp as claimed in any preceding claim wherein the two free ends of the assembled clamp are provided with castellations or similar, interengageable projections extending circumferentially.

13. A hinged clamp as claimed in any preceding claim wherein an external surface of at least two of the clamp portions is provided with a connector configured for connecting to a tool which can be used to control the fitting of the clamp assembly about a below ground pipe from an above ground location.
